# EUROPÄISCHE PATENTSCHRIFT

(11) **EP 1 997 595 B1**
(45) Veröffentlichungstag und Bekanntmachung des Hinweises auf die Patenterteilung: **13.10.2010**
(21) Anmeldenummer: 08003228.7
(22) Anmeldetag: 22.02.2008
(51) Int. Cl.: B26D 1/00, B26D 7/32, B29D 30/00, B65H 20/08, B26D 1/08

(54) **Schneideinrichtung zum Schneiden von Bandmaterial, insbesondere von Textil- oder Stahlcordbändern**
Cutting device for cutting strip material, in particular textile or steel rope strips
Dispositif de coupe destiné à la coupe de matériaux en bandes, en particulier de bandes de textile ou de corde en acier

(30) Priorität: 30.05.2007 DE 102007025384
(43) Veröffentlichungstag der Anmeldung: 03.12.2008
(73) Patentinhaber: Karl Eugen Fischer GmbH, 96224 Burgkunstadt (DE)
(72) Erfinder: Hoffmann, Bernd, 96224 Burgkunstadt (DE); Klenner, Ralf, 96272 Hochstadt (DE)
(74) Vertreter: Blaumeier, Jörg

(56) Entgegenhaltungen:
- EP-A- 1 745 920
- DE-A1- 2 628 887
- DE-C1- 10 203 447

## Beschreibung

Die Erfindung betrifft eine Schneideinrichtung zum Schneiden von Bandmaterial, insbesondere von Textil- oder Stahlcordbändern.

Die Erfindung betrifft eine Schneideinrichtung zum Schneiden von Bandmaterial, insbesondere von Textil- oder Stahlcordbändern, umfassend eine Greifereinrichtung mit einer Materialzange zum Durchziehen von zu schneidendem Bandmaterial durch eine Messeranordnung umfassend ein stationäres Untermesser und ein relativ zu diesem bewegbares Obermesser, sowie ein einen abgeschnitten Bandabschnitt aufnehmendes Abtransportband.

Eine solche Schneideinrichtung ist beispielsweise aus DE 102 03 447 C1 bekannt. Ein von einer Bandmaterialrolle abgewickeltes Bandmaterial wird bei der bekannten Schneideinrichtung mit einer Materialzange einer Greifereinrichtung an der vorlaufenden Bandmaterialkante gegriffen, wonach die Materialzange horizontal zurückgezogen wird und dabei das gegriffene Bandmaterial mitnimmt. Dieses wird dabei durch eine Messeranordnung gezogen, die zum Abschneiden von Abschnitten von dem Bandmaterialstrang dient. Die Messeranordnung weist ein stehendes Untermesser und ein relativ zu diesem bewegbares Obermesser auf, das üblicherweise unter einem Winkel zum horizontal liegenden Untermesser steht, so dass sich beim Schneiden eine Scherwirkung ergibt. Unmittelbar hinter der Messeranordnung, gesehen in Durchzugsrichtung des Bandmaterials, folgt ein Abtransportband, das den abgeschnittenen Bandabschnitt aufnimmt. Da in Folge der oberhalb des Abtransportbandes bewegten Materialzange das Abtransportband etwas niedriger liegt als das Bandmaterial eingezogen wird bzw. in der Schneidebene beim Schneiden liegt, ist zur Vermeidung, dass das geschnittene Bandstück auf das Abtransportband fällt und sich gegebenenfalls verwindet, ein vertikal beweglicher Gegenhalter sowie mit diesem vertikal bewegliche Hochhalter vorgesehen, die beim Schneiden den Bandabschnitt abstützen und beim Absenken auf das Abtransportband ablegen. Der konstruktive Aufbau dieser Einheit ist, wenn gleich äußerst funktionell und wirkungsvoll, jedoch aufwendig.

Der Erfindung liegt damit das Problem zu Grunde, eine Schneideinrichtung anzugeben, die ein einfacher konzipiertes Bandunterstützungssystem aufweist.

Zur Lösung dieses Problems ist bei einer Schneideinrichtung der eingangs genannten Art erfindungsgemäß vorgesehen, dass das mit seinem Obertrum unter einem Winkel zur Horizontalen verlaufende Abtransportband eine Verstelleinrichtung für einen im Bereich der Messeranordnung befindlichen Abschnitt des Obertrums aufweist, über die der Abschnitt zwischen der unter dem Winkel verlaufenden Stellung und einer im Wesentlichen in der Horizontalen liegenden Stellung verstellbar ist.

Bei der erfindungsgemäßen Schneideinrichtung ist keine separate vertikal bewegbare Bandabschnittsaufnahme wie im Stand der Technik vorgesehen, vielmehr wird die Lage des Abtransportbands abschnittsweise selbst verändert, um entsprechend der gegebenen Situation entweder das Materialband beim Abschneiden zu unterstützen, wobei dann der Obertrumabschnitt in der im Wesentlichen horizontalen Stellung ist, oder das Band abzutransportieren, wobei die Verstellrichtung abgesenkt ist und das Abtransportband über die gesamte Obertrumlänge in der gewinkelten Stellung ist. Nachdem bei der erfindungsgemäßen Schneideinrichtung lediglich eine Verstelleinrichtung für die Lage des Obertrumabschnitts vorgesehen ist, entfällt eine aufwendige Aufnahmemimik umfassend Gegen - und Hochhalter wie im Stand der Technik, das heißt, die Schneideinrichtung kann bei gleicher Funktionalität einfacher konzipiert werden.

Die Verstelleinrichtung kann nach einer ersten Erfindungsausgestaltung ein schwenkbar gelagertes, das Obertrum von unten flächig aufnehmendes Blech oder Rahmen sein. Dieses Blech oder der Rahmen befindet sich unterhalb des Obertrums, das heißt, das umlaufende Abtransportband läuft um das Verstellblech. Mit einem Ende ist das Blech schwenkbar gelagert, das andere Ende ist frei. Zur Verschwenkung ist ein geeignetes Stellelement wie z. B. ein Hubzylinder, der elektrisch, pneumatisch oder hydraulisch angesteuert werden kann, vorgesehen. Das Blech oder der Rahmen lagert den Obertrumabschnitt flächig auf, unterstützt also das Abtransportband großflächig. Am freien Ende des Blechs oder des Rahmens kann wenigstens eine Rolle, über die das Abtransportband in der angehobenen Blechstellung läuft, vorgesehen sein. Wird ein geschnittener Bandabschnitt abtransportiert, so befindet sich die Verstelleinrichtung in der abgesenkten Stellung, das Abtransportband wird über die Verstelleinrichtung gezogen. Dabei läuft es über die kantenseitige Rolle des Blechs oder Rahmens, wodurch vermieden wird, dass das Abtransportband an der Kante schabt und beschädigt werden könnte.

Alternativ zur Verwendung eines Blechs oder eines Rahmens kann die Verstelleinrichtung wenigstens eine bewegbare Rolle oder dergleichen aufweisen, die an der Unterseite des Obertrums angreift. Während eine großflächige Abtransportbandunterstützung über das Blech oder den Rahmen dann zweckmäßig ist, wenn das Abtransportband weich ist, also relativ instabil ist und durchhängen kann, ist bei einem hinreichend steifen bzw. harten Abtransportband der Einsatz einer vertikal bewegbaren Rolle ausreichend, die an einer geeigneten Längenposition angeordnet ist. Zum Anheben des Obertrumabschnitts in die Horizontalstellung wird die Rolle vertikal nach oben bewegt, wobei sie das Abtransportband anhebt, das hinreichend steif ist und wenn überhaupt nur in einem zulässigen Maß zwischen der Verstelleinrichtungsrolle und der Abtransportbandrolle, um die es umgelenkt ist, durchhängt. Anstelle einer einzelnen Rolle können auch mehrere nebeneinander angeordnete Einzelrollen vorgesehen sein, wobei auch hier die eine oder die mehreren Rollen über eine geeignete Hubeinrichtung wie einen elektrisch, hydraulisch oder pneumatisch ansteuerbaren Zylinder bewegbar ist oder sind.

Zweckmäßigerweise entspricht der Winkel des Obertrumabschnitts bzw. des Obertrum selbst zur Horizontalen im Wesentlichen dem Winkel des bewegbaren Obermessers zur Horizontalen, mithin also dem Schnittwinkel des Obermessers gegenüber dem Untermesser.

Um den geschnittenen Bandabschnitt nach Beendigung des Schnitts möglichst schnell abfördern zu können, um ihn einer bevorzugt der Schneideinrichtung unmittelbar nachgeschalteten Spleißeinrichtung zuführen zu können, wo er mit einem bereits zuvor gespleißten Band kantenseitig verspleißt wird, sieht eine zweckmäßige Weiterbildung der Erfindung vor, dass der Obertrumabschnitt über die Verstelleinrichtung bereits während des Schneidvorgangs aus der Horizontalen in die winklige Position absenkbar ist. Hierüber wird sichergestellt, dass unmittelbar mit dem Ende des Schneidvorgangs sofort der Abtransport erfolgen kann und nicht erst noch die Verstelleinrichtung bzw. der Obertrumabschnitt abgesenkt werden muss. Zweckmäßigerweise läuft das Abtransportband unmittelbar in die Spleißeinrichtung, so dass der Bandabschnitt direkt an oder in die Spleißeinrichtung gefördert und über das Abtransportband, gegebenenfalls in Verbindung mit einem zur Spleißausrichtung gehörenden Übernahmetransportband, mit seiner zu verspleißenden vorlaufenden Kante direkt in die Spleißposition zwischen den Spleißleisten, mithin also in die korrekte Lagebeziehung zur nachlaufenden Kante des zuvor gespleißten Materialbandes gebracht werden kann. Es ist also lediglich ein einteiliges Abtransportband zwischen Schneideinrichtung und einer nachgeschalteten Spleißeinrichtung vorgesehen, das multifunktional ist, nämlich der Unterstützung des zu schneidenden Bandes beim Schnitt dient, wie auch dem Überführen und lagekorrekten Positionieren des Bandabschnitts in der Spleißeinrichtung.

Die Länge des verstellbaren Abschnitts des Obertrums entspricht zweckmäßigerweise im Wesentlichen der Länge des aufzunehmenden Bandabschnitts. Dabei ist es nicht zwingend erforderlich, dass der Bandabschnitt über seine gesamte Länge aufgelagert wird, vielmehr ist es auch denkbar, dass die vordere Kante des rautenförmigen Bandabschnitts über den Obertrumabschnitt hinausragt und auf dem an den angehobenen Obertrumabschnitt anschließenden Teil des Obertrums liegt.

In Weiterbildung der Erfindung kann vorgesehen sein, dass die Verstelleinrichtung derart verstellbar ist, dass die Länge des verstellbaren Abschnitts des Obertrums variierbar ist. Dies ermöglicht es, sich hinsichtlich der Länge des Obertrumabschnitts variierenden Längen der geschnittenen Bandabschnitte anpassen zu können. Dabei kann, je nach Ausgestaltung der Verstelleinrichtung, entweder die Länge des Blechs oder des Rahmens veränderbar sein, wozu das Blech oder der Rahmen teleskopartig in seiner Länge variierbar sein kann oder wozu ein oder mehrere lösbar anbringbare Blech- oder Rahmenabschnitte vorgesehen sind, alternativ kann die Position der Rolle, horizontal gesehen, veränderbar sein, wozu die Rolle beispielsweise an einer Horizontalführung verstellbar angeordnet sein kann, wobei natürlich auch diese Verstellung automatisch, gesteuert über einen entsprechenden Stellzylinder oder Stellmotor, variiert werden kann.

Neben der Schneideinrichtung selbst betrifft die Erfindung ferner eine Einrichtung zum Schneiden und Spleißen von Bandmaterial, insbesondere von Textil- oder Stahlkordbändern, umfassend eine Schneideinrichtung der beschriebenen Art sowie eine Spleißeinrichtung zum Verspleißen der vorlaufenden Kante eines geschnittenen Bandabschnitts mit der nachlaufenden Kante eines gespleißten Bands, wobei das Abtransportband der Schneideinrichtung bis an oder in die Spleißeinrichtung läuft. Dabei kann die zu verpleißende Kante des Bandabschnitts zweckmäßigerweise mittels des Abtransportbands, gegebenenfalls (aber nicht zwingend erforderlich) im Zusammenwirken mit einem zur Spleißeinrichtung gehörenden Übernahmetransportband, unmittelbar in die Spleißposition anbringbar sein, mithin also in ihrer relativen Lagebeziehung zur nachlaufenden Kante des gespleißten Bandabschnitts über das Abtransportband optimal positioniert werden, so dass unmittelbar der Spleiß erfolgen kann.

Die erfindungsgemäße Einrichtung zeichnet sich also durch eine erfindungsgemäße Spleißeinrichtung einschließlich deren einteiligen, über die Verstelleinrichtung verstellbaren Abtransportband sowie eine dem Abtransportband unmittelbar nachgeschaltete Spleißeinrichtung, in oder an die das Abtransportband unmittelbar läuft, aus.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Seitenansicht einer erfindungsgemäßen Einrichtung zum Schneiden und Spleißen von Bandmaterial umfassend eine erfindungsgemäße Schneideinrichtung,
- Fig. 2: eine Aufsicht auf die Einrichtung aus Fig. 1, und
- Fig. 3a, 3b bis 12a, 12b: Teilansichten der erfindungsgemäßen Schneideinrichtung zur Darstellung der unterschiedlichen Arbeitsschritte innerhalb eines Schneid- und Abtransportzyklus, wobei in den jeweils mit a) gekennzeichneten Figuren eine Ansichten der Materialzange und der Messeranordnung und in den mit b) gekennzeichneten Figuren eine Seitenansicht des zur Darstellung nach den a)- Figuren um 90° verdreht angeordnete Abtransportbands gezeigt ist und
- Fig. 13: eine Prinzipdarstellung einer zweiten erfindungsgemäßen Ausgestaltung einer Verstelleinrichtung.

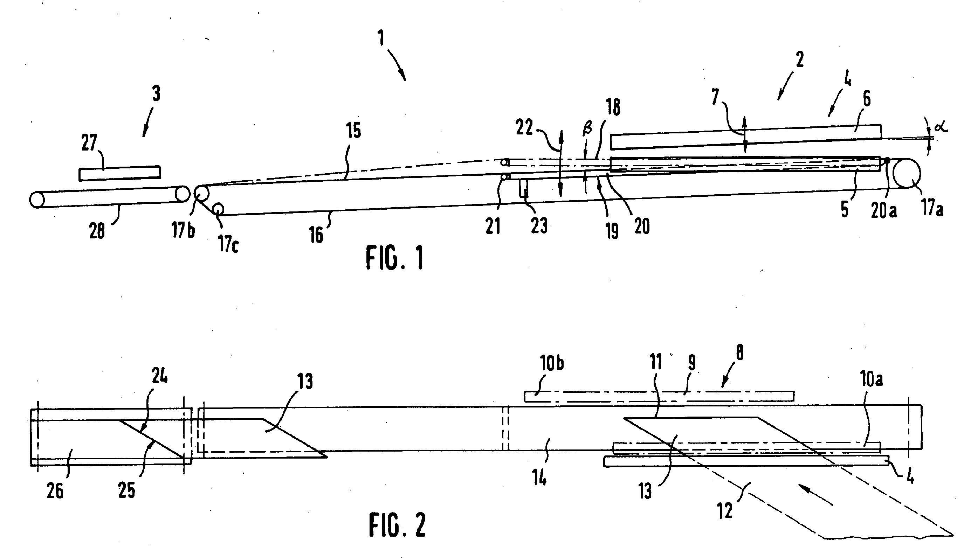

Fig. 1 zeigt eine erfindungsgemäße Einrichtung 1 zum Schneiden und Spleißen von Bandmaterial, umfassend eine erfindungsgemäße Schneideinrichtung 2 und eine dieser nachgeschaltete Spleißeinrichtung 3. Die Fig. 1 und 2 sind lediglich Prinzipdarstellungen, die die wesentlichen Komponenten der Einrichtung zeigen. Der grundsätzliche Aufbau einer Schneideinrichtung und einer Spleißeinrichtung ist hinlänglich bekannt.

Die Schneideinrichtung 2 umfasst eine Messeranordnung 4 mit einem stationären Untermesser 5 und einem vertikal beweglichen Obermesser 6, das unter einem Winkel *α* zum horizontal verlaufenden Untermesser steht und, wie durch den Doppelpfeil 7 gezeigt ist, vertikal bewegbar ist. Vorgesehen ist ferner eine Greifereinrichtung 8 umfassend eine Rückzugszange 9, die horizontal beweglich ist und zwischen einer ausgefahrenen Stellung 10a, in der sie an der vorlaufenden Kante 11 eines zugeführten, von einer Rolle abgewickelten Bandmaterials 12 angreift, und einer eingefahrenen, zurückgezogenen Stellung 10b, in der das Bandmaterial 12 zwischen dem Obermesser 6 und dem Untermesser 5 durchgezogen ist, verstellbar ist. Eine solche Materialzange ist beispielsweise aus dem bereits einleitend genannten Patent DE 102 03 447 C1 bekannt. In Fig. 2 sind die beiden ausgefahrenen und zurückgezogenen Stellungen 10a, 10b gezeigt. Über die Materialzange 9 wird wie beschrieben ein Bandabschnitt 13 zwischen der Messeranordnung 4 hindurchgezogen, welcher Bandabschnitt 13 nachfolgend durch Zusammenfahren des Obermessers 6 und des Untermessers 5 geschnitten wird. Der Bandabschnitt wird während des Schneidens und für den nachfolgenden Abtransport von einem Abtransportband 14 getragen, das ein Obertrum 15 und ein Untertrum 16 aufweist und im gezeigten Beispiels über diverse Umlenkrollen 17a, 17b, 17c geführt ist. Ein Abschnitt 18 des Obertrums 15, der im Bereich der Messeranordnung 4 liegt, ist mittels einer Verstelleinrichtung 19, hier eines um ein Schwenklager 20a verschwenkbaren Rahmens oder Blechs 20, an dessen vorlaufender freien Kante eine Rolle 21 angeordnet ist, zwischen einer unter einem Winkel zur Horizontalen stehenden Position, in der das gesamte Obertrum quasi geradlinig verläuft, und einer angehobenen Stellung (siehe Fig. 1), in der der Obertrumabschnitt 18 im Wesentlichen in der Horizontalen liegt, verstellbar, wie durch den Doppelpfeil 22 gezeigt ist. Der Verstellwinkel β des Obertrumabschnitts 18 entspricht in etwa dem Winkel *α*, den das Obermesser 6 zur Horizontalen einnimmt, das heißt, in der abgesenkten Stellung verläuft der Obertrumabschnitt 18 in etwa parallel zur Schneidkante des Obermessers. Der Verstellwinkel β entspricht auch dem Winkel, den das Obertrum in der gewinkelten Stellung zur Horizontalen einnimmt. Zum Verstellen der Verstelleinrichtung 19 ist eine Hubeinrichtung 23 vorgesehen, beispielsweise ein hydraulisch, pneumatisch oder elektrisch ansteuerbarer Hubzylinder.

Über das Abtransportband 14 wird ein geschnittener Bandabschnitt 13 zur Spleißeinrichtung 3 transportiert, wo seine vorlaufende Kante 24 mit der nachlaufenden Kante 25 eines zuvor gespleißten Bandes 26 verspleißt wird. Hierzu sind z. B. obere und untere Spleißleisten 27 oder Kegelräder zur Erzeugung eines Stumpfspleißes oder andere Spleißeinrichtung vorgesehen, die zusammenfahren, wobei auch die Ausgestaltung solcher Spleißeinrichtungen hinlänglich bekannt ist. Die Spleißeinrichtung 3 umfasst ein Übernahmetransportband 28, das den Bandabschnitt 13 vom Abtransportband 14 zumindest im vorderen Abschnitt übernimmt, wobei das Abtransportband 14 mit dem Übernahmetransportband 28 derart zusammenwirkt, dass die vorlaufende Kante 24 exakt bezüglich der nachlaufenden Kante 25 an der Spleißlinie positioniert werden kann, so dass danach unmittelbar der Spleiß erfolgen kann.

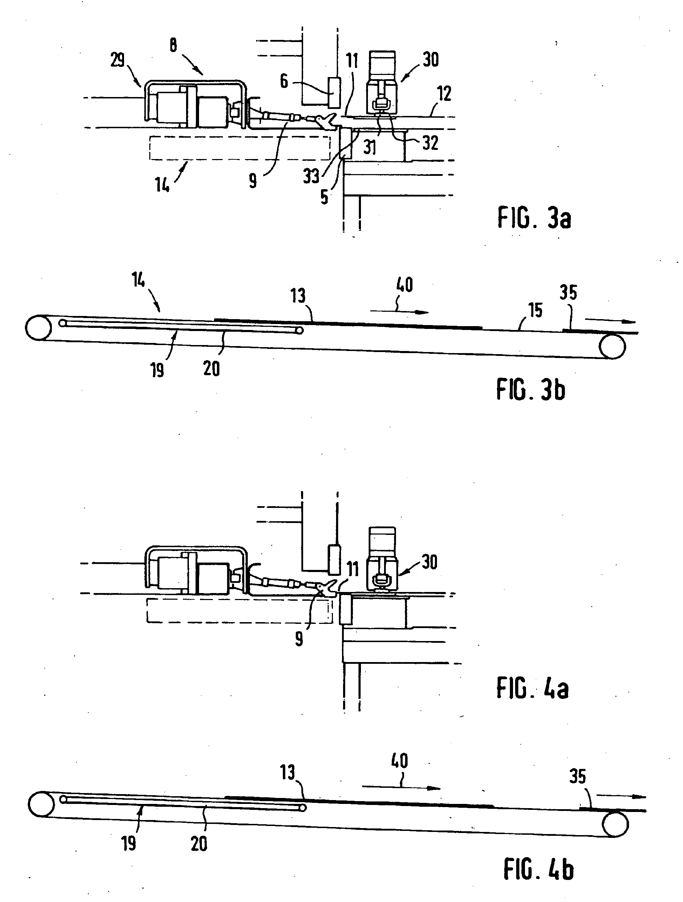

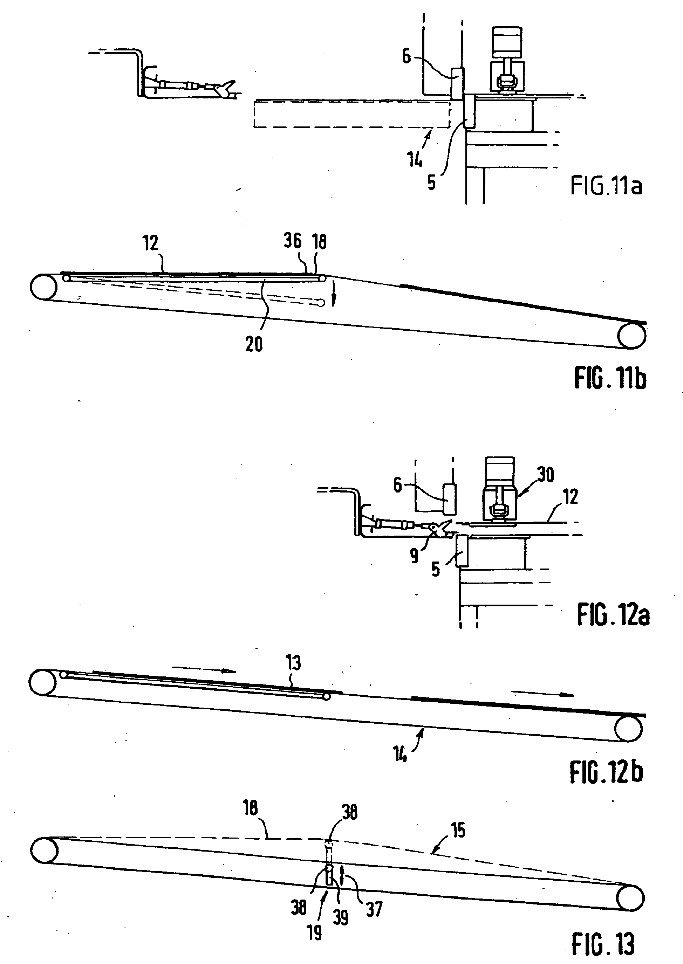

Die Fig. 3a, 3b - 12a, 12b zeigen die Arbeitsweise der erfindungsgemäßen Schneideinrichtung in verschiedenen Zyklusstufen. Fig. 3a zeigt in einer detaillierteren Darstellung die Greifereinrichtung 8 mit der Materialzange 9, die horizontal bewegbar über eine geeignete Bewegungseinrichtung 29 gelagert ist. Gezeigt ist das Untermesser 5 und das Obermesser 6, denen ein Niederhalter 30 vorgeschaltet ist, der das von der Bandrolle abgezogene, zugeführte Bandmaterial 12 im Bereich der vorlaufenden Kante 11 greift, wozu beispielsweise ein Permanentmagnet 31 niederhalterseitig vorgesehen ist, der mit der Klemmleiste 32 zusammenwirkt. Der oder die Permanentmagnete 31 ziehen eine unter dem Bandmaterial 12 angeordnete ferromagnetische Klemmleiste 32 an und verklemmen auf diese Weise das Bandmaterial 12 am Niederhalter 30, so dass in dieser Position ein Hochfahren des Niederhalters 30 bedeutet, dass das Bandmaterial 12 vom Tisch 33 angehoben wird.

Wie Fig. 3b zeigt, ist das Abtransportband 14 in der "Grundstellung", das heißt, das Obertrum 15 ist nicht verformt, die Verstelleinrichtung 19, hier das Verstellblech 20, ist in der abgesenkten, zur Horizontalen gewinkelt verlaufenden Stellung. Ein zuvor geschnittener Bandabschnitt 13 wird, wie durch den Pfeil 40 dargestellt ist, gerade abtransportiert, das heißt, das Abtransportband 14 ist in Betrieb und fördert den Bandabschnitt 13 zur Spleißeinrichtung 3. Gleichzeitig wird der zuvor in der Spleißeinrichtung 3 zu einem Endlosband verspleißte Bandabschnitt 35 durch die Spleißeinrichtung 3 gefördert und mit seiner nachlaufenden Kante an der Spleißlinie positioniert.

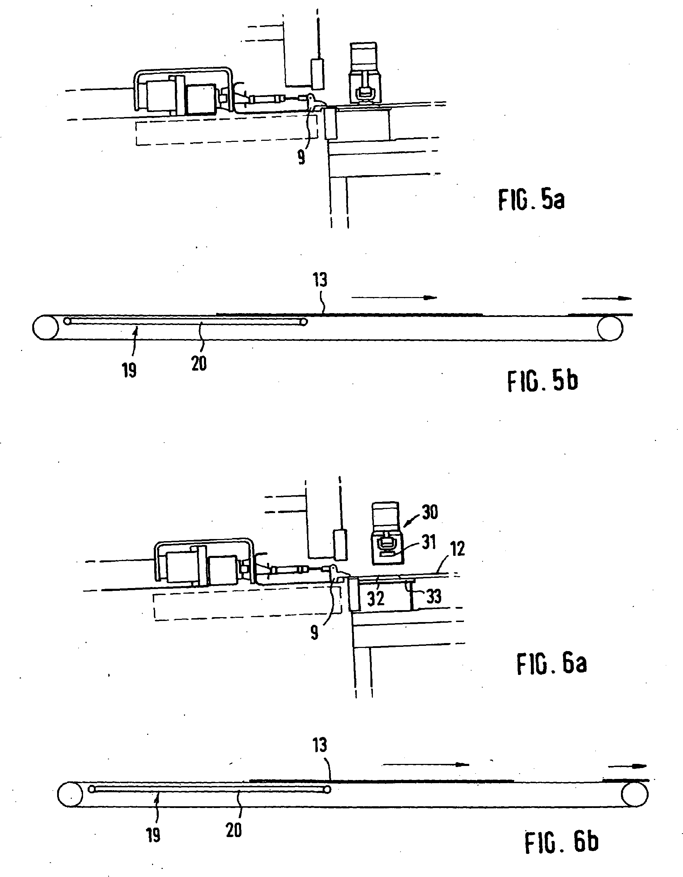

Im nächsten Schritt, siehe Fig. 4a und 5a, wird der Niederhalter 30 nach unten gefahren, wodurch die vorlaufende Bandkante 11 in die geöffnete Materialzange 9 abgelegt wird. Anschließend schließt sich die Materialzange 9, wodurch das Bandmaterial 12 geklemmt wird. Während dieser Vorgänge, siehe die Figuren 4b und 5b, befindet sich die Verstelleinrichtung 19, hier also das Verstellblech 20, nach wie vor in abgesenkten Stellung, das um das Verstellblech 20 umlaufende Abtransportband 14 ist nach wie vor im Betrieb und fördert den Bandabschnitt 13 weiter in Richtung der Spleißeinrichtung 3 sowie der zuvor zu einem Endlosband verspleißte Bandabschnitt durch die Spleißeinrichtung bewegt und seine nachlaufende Kante an der Spleißlinie positioniert wird.

Im nächsten Schritt, siehe Fig. 6a, werden zunächst die Permanentmagneten 31, die innerhalb des Niederhalters 30 bewegbar sind, nach oben gefahren, um die kraftschlüssige Verbindung zur Klemmleiste 32 zu lösen und das Bandmaterial 12 freizugeben. Sodann wird der Niederhalter 30 nach oben gefahren, siehe Fig. 6a. Die Klemmleiste 32 verbleibt auf dem Klemmtisch 33, ebenso wie das Bandmaterial 12. Dieses ist im Niederhalter nicht mehr geklemmt. Wie Fig. 6b zeigt, befindet sich die Verstelleinrichtung 19 nach wie vor in der abgesenkten Stellung, der Bandabschnitt 13 wird immer noch zum Spleißer 3 gefördert sowie der zuvor zu einem Endlosband verspleißte Bandabschnitt durch die Spleißeinrichtung bewegt und seine nachlaufende Kante an der Spleißlinie positioniert wird.

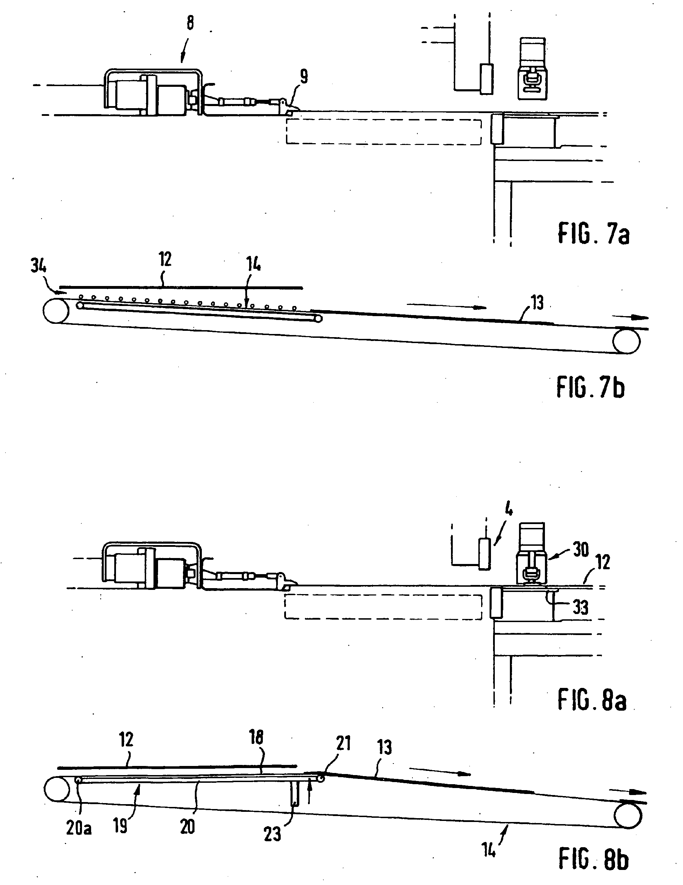

Nunmehr folgt der eigentliche Durchzug des Bandmaterials 12 durch die Messeranordnung 4, indem die Greifereinrichtung 8 und mit ihr die Materialzange 9 ausgehend von der Stellung in Fig. 6a nach links in die Stellung gemäß Fig. 7a gezogen wird. Dabei wird das Bandmaterial mitgenommen und zwischen den beiden Messern 5, 6, senkrecht zu diesen Messern, hindurchgezogen. Die Durchzugslänge ist abhängig von der Bewegungsstrecke der Materialzange 9. Wie in Fig. 7 gezeigt ist, befindet sich nun in Folge des Durchzugs das Materialband 12 oberhalb des Abtransportbands 14, das nach wie vor den Bandabschnitt 13 zur Spleißeinrichtung 3 fördert, mithin also umläuft. Denkbar ist es, über eine Blaseinrichtung 34, dargestellt durch die Ausblasöffnungen, Luft zwischen das Abtransportband 14 und die Unterseite des Materialbandes 12 zu blasen, um zu verhindern, dass dieses, sollte es etwas durchhängen, auf das Transportband 14, das senkrecht zur Durchzugsrichtung des Materialbands 12 läuft, aufliegt.

Im nächsten Schritt, siehe Fig. 8a , fährt der Niederhalter 30 erneut nach unten in die Klemmposition, so dass das Bandmaterial mit dem Klemmtisch 33 im Bereich vor der Messeranordnung 4 verklemmt und damit fixiert wird. Parallel dazu fährt die Verstelleinrichtung 19, hier also das Blech 20, erwirkt über das Stellelement 23, in die angehobene Position, das Blech 20 wird also um das Schwenklager 20a verschwenkt. Dabei wird der Obertrumabschnitt 18 aus der gewinkelten Position, siehe Fig. 7b, in die im Wesentlichen horizontale Position, siehe Fig. 8b, gebracht. Das Abtransportband 14 läuft nach wie vor um, der Bandabschnitt 13 ist immer noch auf dem Weg zum Spleißer 3. Das Abtransportband 14 läuft über die Rolle 21, der Obertrumabschnitt 18 liegt auf dem Blech 20 auf, wird also von diesem unterstützt. Dabei ist die Bewegungssteuerung der Verstelleinrichtung 19 derart, dass kurz vor dem Ende des Ziehvorgangs, also kurz vor dem Moment, zu dem die Materialzange 9 die in Fig. 8a gezeigte Endposition erreicht hat, die Verstelleinrichtung 19 in der angehobenen Position ist, so dass sichergestellt ist, dass mit Erreichen der Zangenendposition der Obertrumabschnitt 18 angehoben ist.

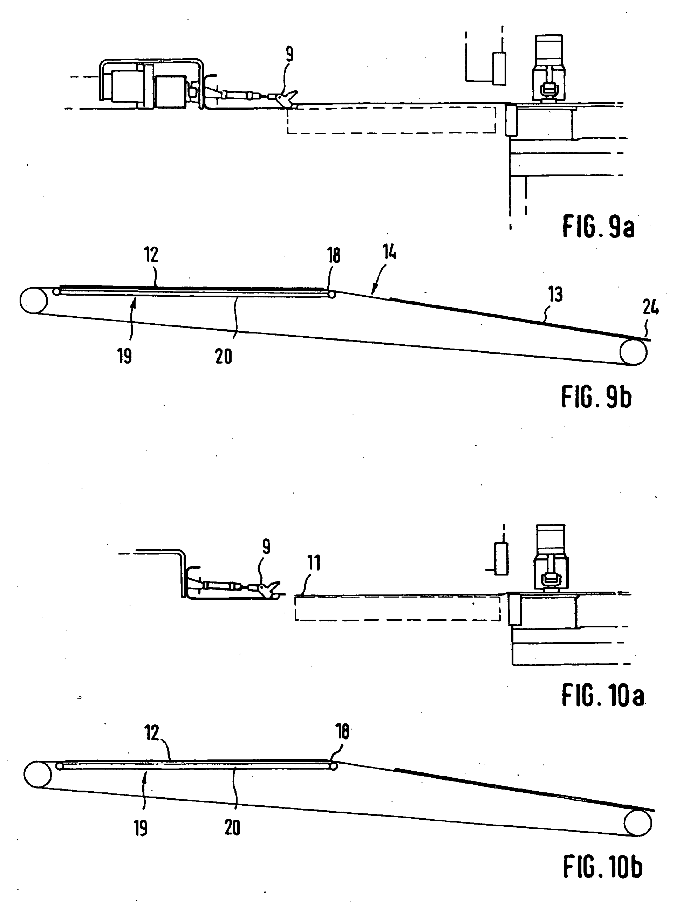

Im nächsten Schritt, siehe Fig. 9a, wird die Materialzange 9 geöffnet. Zu diesem Zeitpunkt hat der Bandabschnitt 13 seine Endposition, in der er mit seiner vorlaufenden Kante 24 in der Spleißeinrichtung 3 in exakter Spleißposition relativ zur nachlaufenden Kante 25 des zuvor gespleißten Bandes angeordnet ist, erreicht, das Abtransportband 14 steht still, nimmt jedoch die in Fig. 9b gezeigte geometrische Form ein. Der Spleißvorgang läuft, das heißt, die Spleißeinrichtung 3 ist aktiv.

Im nächsten Schritt, siehe Fig. 10a, fährt die geöffnete Materialzange 9 weiter nach links, gibt also die Bandkante 11 frei. Das Materialband senkt sich die wenigen Millimeter auf den jetzt ruhenden Obertrumabschnitt 18 ab, liegt also auf diesem auf. Der Obertrumabschnitt 18 selbst ist wie beschrieben über die Stelleinrichtung 19, hier das Blech 20, flächig unterstützt, so dass eine flächige Bandabstützung gegeben ist. Der Spleißvorgang läuft nach wie vor.

Im nächsten Schritt, siehe Fig. 11a, beginnt der eigentliche Schneidvorgang. Das Obermesser 6 wird zum Untermesser 5 hinabgesenkt. In Folge der Schrägstellung des Obermessers 6 zum Untermesser 5 um den Winkel *α* wird das auf dem Obertrumabschnitt 18 aufgelagerte Bandmaterial 12 kantenseitig ein- und durchgeschnitten. Um beim Abfahren des Obermessers 6 eine Kollision mit dem Bandobertrum zu vermeiden, wird während des Schneidens das Blech 20 aus der angehobenen Stellung in die abgesenkte Stellung bewegt, siehe Fig. 11b, wobei der teilgeschnittene Bandabschnitt mitgenommen wird, nachdem der Obertrumabschnitt 18 ebenfalls abgesenkt wird. Der Einschnitt erfolgt im Bereich der vorderen Seitenkante 36 am Bandmaterial 12. Das Blech 20 befindet sich in der abgesenkten Stellung, wenn der Schnitt beendet ist. Dies führt dazu, dass unmittelbar mit dem Ende des Schnitts, wonach das Obermesser 6 sofort wieder angehoben wird, der Abtransport des geschnittenen Bandabschnitts 13 über das Abtransportband 14 erfolgen kann. Zu diesem Zeitpunkt ist der Spleißvorgang in der Spleißeinrichtung 3 beendet. Wie Fig. 12a zeigt, fährt nach Beendigung des Schnitts die Materialzange 9 wieder in die in Fig. 3a gezeigte Stellung, wobei der Niederhalter 30 das Bandmaterial 12 kantenseitig wieder anhebt, um es entsprechend Fig. 4a anschließend wieder in die Materialzange 9 einzulegen, so dass der nächste Banddurchzug erfolgen kann. Gleichzeitig startet der Abtransport für die auf dem Band 14 aufliegenden Bandabschnitte.

An dieser Stelle ist festzuhalten, dass die Verwendung eines Blechs 20 als Verstelleinrichtung 19 dann zweckmäßig ist, wenn das Abtransportband 14 ein flexibles, instabiles Band ist, das für eine Abstützung des Bandmaterials beim Schnitt von unten her flächig aufzulagern ist, um ein Durchhängen zu vermeiden. Handelt es sich bei dem Abtransportband 14 jedoch um ein stabiles, in sich relativ steifes Band, das wenn überhaupt nur in einem tolerablen Maß durchhängen würde, so kann als Verstelleinrichtung eine einzelne Rolle oder ein Rollenpaket verwendet werden, das vertikal bewegt werden kann und von unten her am Obertrum 15 des Abtransportbands 14 her angreift. Verglichen mit der Ausgestaltung mit dem Blech 20 würde diese Rolle oder das Rollenpaket in einer Position am Obertrum angreifen, die in etwa der Position der Rolle 21 entspricht. Fig. 13 zeigt in Form einer Prinzipdarstellung eine solche Verstelleinrichtung 19. Wie durch den Doppelpfeil 37 dargestellt ist, ist die Rolle 38 über ein entsprechendes Stellelement 39 vertikal verstellbar, so dass sich auch hier ohne weiteres ein Obertrumabschnitt 18 in eine Horizontalposition bringen lässt, wobei hier auf Grund der ausreichendenden Steifheit des Obertrums 15 eine Unterstützung nicht erforderlich ist.

## Patentansprüche

1. Schneideinrichtung zum Schneiden von Bandmaterial, insbesondere von Textil- oder Stahlcordbändern, umfassend eine Greifereinrichtung zum Durchziehen von zu schneidendem Bandmaterial durch eine Messeranordnung umfassend ein stationäres Untermesser und ein relativ zu diesem bewegbares Obermesser, sowie ein einen abgeschnittenen Bandabschnitt aufnehmendes Abtransportband, **dadurch gekennzeichnet, dass** das mit seinem Obertrum (15) unter einem Winkel (β) zur Horizontalen verlaufende Abtransportband (14) eine Verstelleinrichtung (19) für einen im Bereich der Messeranordnung (4) befindlichen Abschnitt (18) des Obertrums (15) aufweist, über die der Abschnitt (18) zwischen der unter dem Winkel (β) verlaufenden abgesenkten Stellung und einer im wesentlichen in der Horizontalen liegenden, der Aufnahme eines zu schneidenden Bandabschnitts dienenden Stellung verstellbar ist.

2. Schneideinrichtung nach Anspruch 1, **dadurch gekennzeichnet, dass** die Verstelleinrichtung (19) ein schwenkbar gelagertes, das Obertrum (15) von unten flächig aufnehmendes Blech (20) oder Rahmen ist.

3. Schneideinrichtung nach Anspruch 2, **dadurch gekennzeichnet, dass** am freien Ende des Blechs (20) oder des Rahmens wenigstens eine Rolle (21), über die das Abtransportband (14) in der angehobenen Blechstellung läuft, vorgesehen ist.

4. Schneideinrichtung nach Anspruch 1, **dadurch gekennzeichnet, dass** die Verstelleinrichtung (19) wenigstens eine bewegbar Rolle (38) o.dgl. aufweist, die an der Unterseite des Obertrums (15) angreift.

5. Schneideinrichtung nach einem der vorangehenden Ansprüche, **dadurch gekennzeichnet, dass** der Winkel (β) des Obertrumabschnitts (18) zur Horizontalen im wesentlichen dem Winkel (α) des bewegbaren Obermessers (6) zur Horizontalen entspricht.

6. Schneideinrichtung nach einem der vorangehenden Ansprüche, **dadurch gekennzeichnet, dass** der Obertrumabschnitt (18) über die Verstelleinrichtung (19) bereits während des Schneidvorgangs aus der horizontalen in die winklige Position absenkbar ist.

7. Schneideinrichtung nach einem der vorangehenden Ansprüche, **dadurch gekennzeichnet, dass** die Länge des Abschnitts (18) im wesentlichen der Länge eines aufzunehmenden Bandabschnitts (13) entspricht.

8. Schneideinrichtung nach einem der vorangehenden Ansprüche, **dadurch gekennzeichnet, dass** die Verstelleinrichtung (19) derart verstellbar ist, dass die Länge des verstellbaren Abschnitts (18) des Obertrums (15) variierbar ist.

9. Schneideinrichtung nach Anspruch 8, **dadurch gekennzeichnet, dass** die Länge des Blechs (20) oder des Rahmens veränderbar ist, oder dass die Position der Rolle (38) veränderbar ist.

10. Schneideinrichtung nach Anspruch 9, **dadurch gekennzeichnet, dass** das Blech (20) oder der Rahmen teleskopartig in seiner Länge variierbar ist, oder dass ein oder mehrere lösbar anbringbare Blechabschnitte vorgesehen sind, oder dass die Rolle (38) an einer Horizontalführung verstellbar angeordnet ist.

11. Einrichtung zum Schneiden und Spleißen von Bandmaterial, insbesondere von Textil- oder Stahlcordbändern, umfassend eine Schneideinrichtung (2) nach einem der vorangehenden Ansprüche sowie eine Spleißeinrichtung (3) zum Verspleißen der vorlaufenden Kante (24) eines geschnittenen Bandabschnitts (13) mit der nachlaufenden Kante (25) eines gespleißten Bands (26), wobei das Abtransportband (14) der Schneideinrichtung (2) bis in oder an die Spleißeinrichtung (3) läuft.

12. Einrichtung nach Anspruch 11, **dadurch gekennzeichnet, dass** die zu verspleißende Kante (24) des Bandabschnitts (13) mittels des Abtransportbands (14) unmittelbar in die Spleißposition bringbar ist.

## Claims

1. A cutting device for cutting strip material, in particular, textile or steel-rope strips, comprising a gripping device for pulling strip material to be cut through a cutter arrangement comprising a stationary lower blade and an upper blade displaceable relative to the latter, and a conveyor belt receiving a cut strip portion,
**characterised in that**
the conveyor belt (14) extending with its upper run (15) at an angle (β) to the horizontal provides an adjustment device (19) for a portion (18) of the upper run (15) disposed in the region of the cutter arrangement (4), by means of which the portion (18) is adjustable between the lower position extending at the angle (β) and a position disposed substantially in the horizontal, serving to receive a strip portion to be cut.

2. The cutting device according to claim 1,
**characterised in that**
the adjustment device (19) is a metal plate (20) or frame mounted in a pivoted manner, receiving the upper run (15) from below over its surface area.

3. The cutting device according to claim 2,
**characterised in that,**
at the free end of the metal plate (20) or of the frame, at least one roller (21), is provided, over which the conveyor belt (14) runs in the raised position of the metal plate.

4. The cutting device according to claim 1,
**characterised in that**
the adjustment device (19) provides at least one displaceable roller (38) or similar, which engages with the underside of the upper run (15).

5. The cutting device according to any one of the preceding claims,
**characterised in that**
the angle (β) of the upper-run portion (18) relative to the horizontal corresponds substantially to the angle (α) of the displaceable upper blade (6) relative to the horizontal.

6. The cutting device according to any one of the preceding claims,
**characterised in that**
the upper-run portion (18) can be lowered from the horizontal into the angular position via the adjustment device (19) even during the cutting process.

7. The cutting device according to any one of the preceding claims,
**characterised in that**
the length of the portion (18) corresponds substantially to the length of a strip portion (13) to be received.

8. The cutting device according to any one of the preceding claims,
**characterised in that**
the adjustment device (19) is adjustable in such a manner that the length of the adjustable portion (18) of the upper run (15) is variable.

9. The cutting device according to claim 8,
**characterised in that**
the length of the metal plate (20) or of the frame is variable, or that the position of the roller (38) is variable.

10. The cutting device according to claim 9,
**characterised in that**
the metal plate (20) or the frame is variable in its length in a telescopic manner, or that one or more metal-plate portions can be attached in a detachable manner, or that the roller (38) is arranged in an adjustable manner on a horizontal guide.

11. A device for cutting and splicing strip material, especially textile or steel-rope strips, comprising a cutting device (2) according to any one of the preceding claims and a splicing device (3) for splicing the forward edge (24) of a cut-strip portion (13) with the trailing edge (25) of a spliced strip (26), wherein the conveyor belt (14) of the cutting device (2) extends into or up to the splicing device (3).

12. The device according to claim 11,
**characterised in that**
the edge (24) to be spliced of the strip portion (13) can be brought directly into the splicing position by means of the conveyor belt (14).

## Revendications

1. Dispositif de coupe destiné à la coupe d'un matériau en bande, en particulier des bandes textiles ou des bandes de câbles en acier, comportant un dispositif de préhension pour faire défiler le matériau en bande à couper à travers un système de lames de coupe comportant une lame inférieure fixe et une lame supérieure mobile par rapport à cette dernière, ainsi qu'une bande transporteuse d'évacuation, recevant un tronçon de bande coupé, **caractérisé en ce que** la bande transporteuse d'évacuation (14), qui défile avec son brin supérieur (15) formant un angle (β) avec l'horizontale, comporte un dispositif de déplacement (19) pour un segment (18) du brin supérieur (15) situé dans la zone du système de lames de coupe (4), par l'intermédiaire duquel le segment (18) peut être déplacé entre la position abaissée, s'étendant selon l'angle (β), et une position, située sensiblement dans l'horizontale, utilisée pour recevoir un tronçon de bande à couper.

2. Dispositif de coupe selon la revendication 1, **caractérisé en ce que** le dispositif de déplacement (19) est une plaque (20) ou un cadre, monté pivotant, recevant le brin supérieur (15) à plat par le dessous.

3. Dispositif de coupe selon la revendication 2, **caractérisé en ce qu'**à l'extrémité libre de la plaque (20) ou du cadre est prévu au moins un rouleau (21) sur lequel la bande transporteuse d'évacuation (14) défile dans la position relevée de la plaque.

4. Dispositif de coupe selon la revendication 1, **caractérisé en ce que** le dispositif de déplacement (19) comporte au moins un rouleau (38) mobile ou élément similaire, qui s'applique contre la face inférieure du brin supérieur (15).

5. Dispositif de coupe selon l'une quelconque des revendications précédentes, **caractérisé en ce que** l'angle (β) entre le segment (18) du brin supérieur et l'horizontale correspond sensiblement à l'angle (α) entre la lame de coupe supérieure (6) et l'horizontale.

6. Dispositif de coupe selon l'une quelconque des revendications précédentes, **caractérisé en ce que,** par l'intermédiaire du dispositif de déplacement (19), le segment (18) du brin supérieur peut être abaissé, déjà pendant le processus de coupe, hors de la position horizontale dans la position angulaire.

7. Dispositif de coupe selon l'une quelconque des revendications précédentes, **caractérisé en ce que** la longueur du segment (18) correspond sensiblement à la longueur d'un tronçon de bande (13) à recevoir.

8. Dispositif de coupe selon l'une quelconque des revendications précédentes, **caractérisé en ce que** le dispositif de déplacement (19) peut être déplacé de telle sorte que la longueur du segment (18) réglable du brin supérieur (15) est variable.

9. Dispositif de coupe selon la revendication 8, **caractérisé en ce que** la longueur de la plaque (20) ou du cadre peut être modifiée ou **en ce que** la position du rouleau (38) peut être modifiée.

10. Dispositif de coupe selon la revendication 9, **caractérisé en ce que** la plaque (20) ou le cadre est variable en longueur de manière télescopique, ou **en ce qu'**il prévu une ou plusieurs parties de plaque aptes à être assemblées de manière amovible, ou **en ce que** le rouleau (38) est monté réglable sur un guidage horizontal.

11. Dispositif destiné à couper et à épisser un matériau en bande, en particulier des bandes textiles ou des bandes de câbles en acier, comportant un dispositif de coupe (2) selon l'une quelconque des revendications précédentes, ainsi qu'un dispositif à épissure (3) pour épisser le bord avant (24) d'un tronçon de bande (13) coupé avec le bord arrière (25) d'une bande épissée (26), la bande transporteuse d'évacuation (14) du dispositif de coupe (2) défilant jusque dans ou contre le dispositif à épissure (3).

12. Dispositif selon la revendication 11, **caractérisé en ce que** le bord (24) à épisser du tronçon de bande (13) peut être amené directement dans la position d'épissure au moyen de la bande transporteuse d'évacuation (14).
